# EUROPEAN PATENT SPECIFICATION

(11) **EP 3 937 518 B1**
(45) Date of publication and mention of the grant of the patent: **09.12.2026**
(21) Application number: 21177554.9
(22) Date of filing: 31.10.2014
(51) Int. Cl.: H04W 72/21, H04W 72/23, H04W 36/00, H04W 4/06, H04W 8/18, H04W 72/121

(54) **GROUP COMMUNICATION METHOD AND APPARATUS**
GRUPPENKOMMUNIKATIONSVERFAHREN UND -VORRICHTUNG
PROCÉDÉ ET APPAREIL DE COMMUNICATION DE GROUPE

(43) Date of publication of application: 12.01.2022
(60) Divisional application: 25214059.5 / 4 718 930
(62) Document number(s) of the earlier application(s) in accordance with Art. 76 EPC: 14904938.9 / 3 206 417
(73) Proprietor: HUAWEI TECHNOLOGIES CO., LTD., Shenzhen, Guangdong 518129 (CN)
(72) Inventor: LI, Bingzhao, Shenzhen, 518129 (CN); GAO, Yongqiang, Shenzhen, 518129 (CN); ZHANG, Jian, Shenzhen, 518129 (CN); QUAN, Wei, Shenzhen, 518129 (CN)
(74) Representative: Gill Jennings & Every LLP

(56) References cited:
- US-A1- 2014 286 225
- HUAWEI: "eMBMS Stage 2 description for release 9", 3GPP DRAFT; R3-090800 MBMS STAGE2 FOR RAN3, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Seoul, Korea; 20090318, 18 March 2009 (2009-03-18), XP050341179

## Description

### TECHNICAL FIELD

Embodiments of the present invention relate to the field of wireless communications technologies, and in particular, to a group communication method and an apparatus.

### BACKGROUND

Group communication refers to a mechanism in which multiple user equipments (User Equipment, UE) are used as a group to perform communication. A characteristic of the group communication is that multiple UEs in a group may receive same data at the same time.

In current voice communication, group communication is generally performed by using a group communication server, each UE in the group establishes a signaling connection and a voice connection to the group communication server. By using the signaling connection to the UE, the group communication server controls UE that can send an uplink voice, and sends the received uplink voice to another UE in the group. However, in the group communication of the voice communication, each UE needs a separate downlink voice channel on an access network side. Although downlink voices received by multiple UEs in the group are the same, a piece of downlink voice data still needs to be separately sent to each UE, wasting radio resources on the access network side.

On the other hand, in wireless communication, there is also a point to multipoint (Point to Multipoint, PTM) technology. The PTM is generally implemented by using a multimedia broadcast multicast service (Multimedia Broadcast Multicast Service, MBMS) technology. An enhanced multimedia broadcast multicast service (enhanced Multimedia Broadcast Multicast Service, eMBMS) technology is a technology used to deliver a same service to multiple UEs by using a broadcast channel, where a group of UEs receiving the same service receive the service by using a same downlink configuration, and it is unnecessary to establish a separate link for each UE.

However, the current eMBMS uses a multicast broadcast single frequency network (Multicast Broadcast Single Frequency Network, MBSFN) technology, where all cells in an area use a same resource to send a service. In an area in which group communication is performed by using the eMBMS, if UEs in a group are unevenly distributed, and there may be few users or no user in some cells, the radio resource usage efficiency is relatively low in a cell that has few users or no user.

US 2014/286225 A1 describes a method of supporting group communication over LTE Multimedia Broadcast Multicast Service. HUAWEI: "eMBMS Stage 2 description for release 9", 3GPP DRAFT, XP050341179 describes an overview and overall description of the E-UTRAN radio interface protocol architecture.

### SUMMARY

Embodiments of the present invention provide a group communication method and an apparatus, allowing group communication to be performed at the granularity of per cell, thereby saving transmission resources used in the group communication, and increasing resource utilization.

The invention is defined by the independent claims. Preferred embodiments are defined in the dependent claims.

By means of the group communication method and the apparatus that are provided in the embodiments of the present invention, a base station determines to start scheduling PTM transmission in a first cell, then sends configuration information of the scheduling PTM transmission to UE in the first cell, and sends, on a scheduling PTM transmission resource, data according to an indication of the configuration information, so that the base station can perform PTM transmission at the granularity of per cell, which saves transmission resources, and increases resource utilization.

### BRIEF DESCRIPTION OF DRAWINGS

To describe the technical solutions in the embodiments of the present invention or in the prior art more clearly, the following briefly introduces the accompanying drawings required for describing the embodiments or the prior art. Apparently, the accompanying drawings in the following description show some embodiments of the present invention, and persons of ordinary skill in the art may still derive other drawings from these accompanying drawings without creative efforts.
FIG. 1 is a schematic diagram of a group communication system architecture in voice communication;
FIG. 2 is a schematic diagram of an MBMS system architecture;
FIG. 3 is a schematic structural diagram of Embodiment 1 of a base station according to an embodiment of the present invention;
FIG. 4 is a schematic structural diagram of Embodiment 2 of a base station according to an embodiment of the present invention;
FIG. 5 is a schematic structural diagram of Embodiment 1 of UE according to an embodiment of the present invention;
FIG. 6 is a schematic structural diagram of Embodiment 2 of UE according to an embodiment of the present invention;
FIG. 7 is a flowchart of Embodiment 1 of a group communication method according to an embodiment of the present invention;
FIG. 8 is a flowchart of Embodiment 2 of a group communication method according to an embodiment of the present invention;
FIG. 9 is a flowchart of Embodiment 3 of a group communication method according to an embodiment of the present invention;
FIG. 10 is a flowchart of Embodiment 4 of a group communication method according to an embodiment of the present invention;
FIG. 11 is a flowchart of Embodiment 5 of a group communication method according to an embodiment of the present invention; and
FIG. 12 is a flowchart of Embodiment 6 of a group communication method according to an embodiment of the present invention.

### DESCRIPTION OF EMBODIMENTS

To make the objectives, technical solutions, and advantages of the embodiments of the present invention clearer, the following clearly and completely describes the technical solutions in the embodiments of the present invention with reference to the accompanying drawings in the embodiments of the present invention. Apparently, the described embodiments are a part rather than all of the embodiments of the present invention.

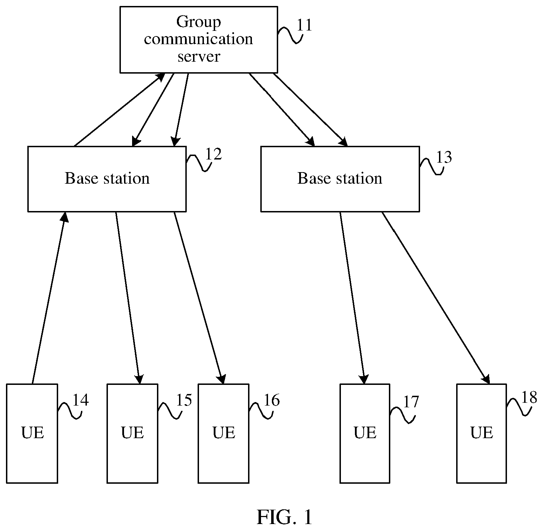

FIG. 1 is a schematic diagram of a group communication system architecture in voice communication. As shown in FIG. 1, a network is set with a group communication server 11, several base stations, and several UEs, where in FIG. 1, two base stations are used as an example for illustration: a base station 12 and a base station 13, and five UEs are used as an example for illustration: UE 14 to UE 18. The UE 14, UE 15, and UE 16 access the base station 12, and the UE 17 and UE 18 access the base station 13.

In the system shown in FIG. 1, as UEs in one group, the UE 14 to the UE 18 may perform group communication with each other. However, in the system shown in FIG. 1, only one UE of a group of UEs can send voice data at a time, and other UEs receive the voice data of the UE. For example, the UE 14 sends voice data to the base station 12, and then the base station 12 sends the voice data to the group communication server 11. Then, the group communication server 11 sends the voice data to the base station 12 and the base station 13, and then the base station 12 and the base station 13 separately send the voice data to the UE 15, UE 16, UE 17, and UE 18. In the system shown in FIG. 1, on an access network side, each UE needs a separate downlink voice channel, therefore wasting resources on the access network side.

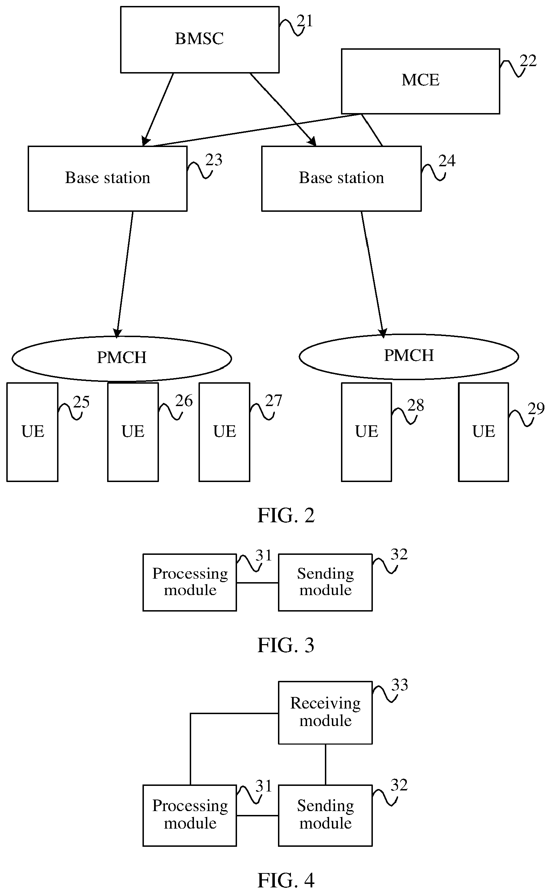

FIG. 2 is a schematic diagram of an MBMS system architecture. As shown in FIG. 2, a network is set with a broadcast multicast service center (Broadcast Multicast Service Center, BMSC) 21, a multi-cell/multicast coordination entity (Multi-cell/multicast Coordination Entity, MCE) 22, several base stations, and several UEs, where in FIG. 2, two base stations are used as an example for illustration: a base station 23 and a base station 24, and five UEs are used as an example for illustration: UE 25 to UE 29. The UE 25, UE 26, and UE 27 access the base station 23, and the UE 28 and UE 29 access the base station 24.

In the system shown in FIG. 2, as UEs in one group, the UE 25 to the UE 29 may receive same broadcast multicast data. The BMSC 21 sends broadcast multicast data to the base station 23 and the base station 24, and the MCE 22 is configured to coordinate broadcast multicast data of the base stations. The base stations send broadcast multicast data to UEs by using a physical multicast channel (Physical Multicast Channel, PMCH). However, in the system shown in FIG. 2, the broadcast multicast data sent by the base stations to UEs are the same. On a network, if there is a base station that does not connect to UE or a cell of a base station that does not connect to UE, the base station still needs to receive the broadcast multicast data sent by the BMSC, and still needs to send, on the PMCH, the broadcast multicast data. This causes relatively low efficiency of radio resources.

In summary, all current group communication methods have defects, causing a waste of radio resources or relatively low usage efficiency of radio resources.

FIG. 3 is a schematic structural diagram of Embodiment 1 of a base station according to an embodiment of the present invention. As shown in FIG. 3, the base station in this embodiment includes:
a processing module 31, configured to determine to start scheduling PTM transmission in a first cell, where the scheduling PTM transmission is used to enable user equipment UE in the first cell to receive data on a scheduling PTM transmission resource; and
a sending module 32, configured to: send configuration information of the scheduling PTM transmission to the UE in the first cell, where the configuration information is used to enable the UE in the first cell to receive data according to an indication of the configuration information; and send, on the scheduling PTM transmission resource, data according to the indication of the configuration information.

Specifically, the base station provided in this embodiment is applied to the MBMS system architecture shown in FIG. 2. The base station includes the processing module 31 and the sending module 32. The processing module 31 is configured to determine to start the scheduling PTM transmission in the first cell, and the sending module 32 is configured to send the configuration information of the scheduling PTM transmission to the UE in the first cell, and send, on the scheduling PTM transmission resource, the data according to the indication of the configuration information.

In a current MBMS technology, when PTM transmission needs to be performed, all base stations receive broadcast multicast data from a BMSC, and each base station sends, in all provided cells, the broadcast multicast data, causing low resource utilization. However, in the base station provided in this embodiment, first of all, the processing module 31 determines to start the scheduling PTM transmission in the first cell, then the sending module 32 sends the configuration information of the scheduling PTM transmission to the UE in the first cell, and finally the sending module 32 sends the data on the scheduling PTM transmission resource. Therefore, the PTC transmission can be performed at the granularity of per cell, and the PTC transmission does not need to be performed on the entire network. The scheduling PTM transmission is used to enable the UE in the first cell to receive the data on the scheduling PTM transmission resource. In other words, a purpose of the scheduling PTM transmission is to perform the PTM transmission at the granularity of per cell. One base station may provide multiple cells, a determining module 31 can determine whether to start the scheduling PTM transmission in a cell, according to a status of UE in each cell, for example, UE data or a requirement of the UE, or another specific condition.

The scheduling PTM transmission is performed for the UE in the first cell. Therefore, different from the MBMS shown in FIG. 2, after the processing module 31 determines to start the PTM transmission in the first cell, the base station further needs to notify the UE in the first cell that the PTM transmission is to be performed. The sending module 32 first sends the configuration information of the scheduling PTM transmission to the UE in the first cell, where the configuration information of the scheduling PTM transmission enables the UE in the first cell to learn that the base station is to perform the scheduling PTM transmission, and learn related configuration information for receiving scheduling PTM transmission data. Then, the sending module 32 can send, on the scheduling PTM transmission resource, the data according to the indication of configuration information.

The base station provided in this embodiment performs PTM transmission at the granularity of per cell. Therefore, when the base station determines that PTM transmission does not need to be performed in a cell, the base station does not start the scheduling PTM transmission in the cell, so that the cell does not need to allocate a transmission resource for the PTM transmission, thereby saving the transmission resource, and increasing resource utilization.

The base station provided in this embodiment determines to start scheduling PTM transmission in a first cell, then sends configuration information of the scheduling PTM transmission to UE in the first cell, and sends, on a scheduling PTM transmission resource, data according to an indication of the configuration information, so that the base station can perform PTM transmission at the granularity of per cell, which saves transmission resources, and increases resource utilization.

FIG. 4 is a schematic structural diagram of Embodiment 2 of a base station according to an embodiment of the present invention. As shown in FIG. 4, on the basis of FIG. 3, the base station in this embodiment further includes:
a receiving module 33, configured to receive data sent by an MBMS gateway.

The sending module 32 is further configured to: before sending, on the scheduling PTM transmission resource, the data according to the indication of the configuration information, send a multicast joining request message to the MBMS gateway.

Specifically, after the processing module 31 determines to start the scheduling PTM transmission in the first cell, if the base station has started scheduling PTM transmission in another cell, the base station has received PTM data sent from the MBMS gateway, and sends the PTM data to another cell by using the sending module 32. In this case, when the processing module 31 determines to start the scheduling PTM transmission in the first cell, the base station may directly send, in the first cell by using the sending module 32, the PTM data received from the MBMS gateway.

If the base station has not yet started scheduling PTM transmission in another cell, before sending, on the scheduling PTM transmission resource, the data according to the indication of the configuration information, the sending module 32 further needs to send the multicast joining request message to the MBMS gateway. In other words, if the base station has not started scheduling PTM transmission in any cell, the base station first needs to send the multicast joining request message to the MBMS gateway by using the sending module 32, to request to join a multicast service. Then, the receiving module 33 receives data sent by the MBMS gateway, where the data is the PTM data. In this case, the sending module 32 can send, on the scheduling PTM transmission resource according to the indication of the configuration information, the data received from the MBMS gateway.

On the basis of the embodiment shown in FIG. 3, the base station provided in this embodiment implements that a base station that has not joined a multicast service can perform group communication.

It should be noted that, in the embodiment shown in FIG. 3 or FIG. 4, there may be multiple trigger conditions for the processing module 31 to determine to start the scheduling PTM transmission in the first cell, which are separately described one by one in the following.

In a first case, an upper-level network device determines to start the PTM transmission in the first cell, and the base station starts the PTM transmission in the first cell according to an indication of the upper-level network device. The upper-level network device includes an MCE, a mobility management entity (Mobility Management Entity, MME), an application server, or the like.

In this case, the receiving module 33 is further configured to: before the processing module 31 determines to start scheduling PTM transmission in the first cell, receive a first cell scheduling PTM transmission start notification message sent by the upper-level network device; and the processing module 31 is specifically configured to: when the receiving module 33 receives the first cell scheduling PTM transmission start notification message, determine to start the scheduling PTM transmission in the first cell.

Specifically, the upper-level network device collects UE position information, and the upper-level network device determines, according to the collected UE position information, whether to start the PTM transmission. The upper-level network device may learn a coverage area of each cell, and therefore may determine, according to the collected UE position information, a cell in which the UE is located. The upper-level network device may determine, according to a quantity of UEs in each cell, whether to start the scheduling PTM transmission in the cell. If a quantity of UEs in a cell exceeds a preset threshold, the upper-level network device may determine to start the scheduling PTM transmission in the cell. After the receiving module 33 receives the first cell scheduling PTM transmission start notification message sent by the upper-level network device, the processing module 31 may determine to start the scheduling PTM transmission in the cell. The upper-level network device determines, according to the quantity of UEs in the first cell, whether to start the scheduling PTM transmission in the first cell, and instructs, only when the quantity of the UEs in the first cell exceeds the preset threshold, the base station to start the scheduling PTM transmission in the first cell. Therefore, when there is an excessively small quantity of UEs or no UE in a cell, the base station does not receive a scheduling PTM transmission start notification message sent by the upper-level network device, avoiding a problem of the excessively low resource efficiency caused by starting the PTM transmission in a cell that has no UE or an excessively small quantity of UEs.

Further, the receiving module 33 is specifically configured to receive an MBMS task start message sent by the upper-level network device, where the MBMS task start message includes the first cell scheduling PTM transmission start notification message, and the first cell scheduling PTM transmission start notification message carries identification information or scheduling PTM transmission indication information of the first cell. In other words, a manner in which the upper-level network device instructs the base station to start the scheduling PTM transmission may be sending an MBMS task start (MBMS session start) message to the base station. Optionally, the MBMS task start message may carry the identification information or the scheduling PTM transmission indication information of the first cell, so that after the receiving module 33 receives the MBMS task start message sent by the upper-level network device, the determining module 31 determines to start the scheduling PTM transmission in the first cell.

In a second case, an upper-level network device collects UE information, the base station receives the UE information sent by the upper-level network device, and the base station determines, according to the UE information, to start the PTM transmission in the first cell.

In this case, the receiving module 33 is further configured to: before the processing module 31 determines to start the scheduling PTM transmission in the first cell, receive information that is about UE in the first cell and that is sent by the upper-level network device; and the processing module 31 is specifically configured to: if a quantity of UEs in the first cell exceeds a preset threshold, determine to start the scheduling PTM transmission in the first cell.

Specifically, the upper-level network device collects the UE information, where the information includes but is not limited to UE position information. The upper-level network device sends the collected UE information to a base station that serves the UE. After the receiving module 33 in the base station receives the UE information sent by the upper-level network device, UEs located in the first cell may be determined. Then, the processing module 31 determines the quantity of the UEs in the first cell. When the quantity of the UEs in the first cell exceeds a preset threshold, the processing module 31 determines to start the scheduling PTM transmission in the first cell. The processing module 31 in the base station determines, according to the quantity of the UEs in the first cell, whether to start the scheduling PTM transmission in the first cell, and determines, only when the quantity of the UEs in the first cell exceeds the preset threshold, to start the scheduling PTM transmission in the first cell. Therefore, when there is an excessively small quantity of UEs or no UE in a cell, the processing module 31 does not determine to start the PTM transmission in the cell, avoiding a problem of the excessively low resource efficiency caused by starting the PTM transmission in a cell that has no UE or an excessively small quantity of UEs.

In the second case, UEs served by the base station send, to the base station, group service information that the UEs are interested in, and the base station determines, according to the group service information that the UEs are interested in and that is reported by the UEs, to start the PTM transmission in the first cell.

In this case, the receiving module 33 is further configured to: before the processing module 31 determines to start the scheduling PTM transmission in the first cell, receive first information sent by the UE in the first cell, where the first information includes group service information that the UE expects to receive; and the processing module 31 is specifically configured to: in the first information sent by the UE in the first cell, if a quantity of same group service information expected to be received exceeds a preset threshold, determine to start the scheduling PTM transmission in the first cell, where the scheduling PTM transmission is used to transmit the group service information that is expected to be received and whose quantity exceeds the preset threshold.

Specifically, all the UEs served by the base station may send the group service information that the UEs are interested in to the base station, for example, voice-type information, text-type information, and video-type information, or group service information categorized in another categorization manner, where the information is referred to as the first information. After receiving the first information sent by the UEs, the receiving module 33 collects the first information sent by the UEs located in the first cell, and then the processing module 31 determines whether a quantity of same group service information expected to be received in the first information sent by the UEs in the first cell exceeds a preset threshold. If the quantity exceeds the preset threshold, the processing module 31 may determine that, among the UEs in the first cell, many users expect to receive a particular piece of group service information, and therefore may determine to start the scheduling PTM transmission in the first cell. In addition, the scheduling PTM transmission is used to transmit the group service information that is expected to be received and whose quantity exceeds the preset threshold. The processing module 31 in the base station determines, according to group service information that the UE in the first cell expects to receive, whether to start the scheduling PTM transmission in the first cell, and determines, only when a quantity of same group service information that the UE in the first cell expects to receive exceeds the preset threshold, to start the scheduling PTM transmission in the first cell. Therefore, in a cell, when a quantity of same group service information that UE expects to receive is excessively small or there is no same group service information that UE expects to receive, the processing module 31 does not determine to start the PTM transmission in the cell, avoiding a problem of the excessively low resource efficiency caused by starting the PTM transmission in a cell that has no UE or an excessively small quantity of UEs.

Further, in the embodiment shown in FIG. 4, the receiving module 33 is further configured to receive second information sent by the UE in the first cell, where the second information includes information about a source cell in which the UE is located before the UE hands over to or reselects the first cell; and the sending module 32 is further configured to send third information to a source base station to which the source cell of the UE that sends the second information belongs, where the third information includes the information about the UE that sends the second information, and the third information is used to enable the source base station to exclude, when counting the quantity of the group service information expected to be received, the UE that sends the second information.

Specifically, in mobile communication, UE may be in a mobile state, and therefore the UE may be handed over between cells. With reference to the cases in this embodiment of the present invention, when the base station provides a group communication service to UE in a cell, if the UE in the cell moves out of the cell, the base station cannot provide the group communication service to the UE. In the foregoing second or third case, the base station determines whether to start the scheduling PTM transmission in the first cell; therefore, if UE in a cell moves out of the cell, when counting a quantity of UEs in the cell or collecting statistics on group service information that UE expects to receive, the base station needs to exclude the UE that moves out of the cell. Herein, a specific implementation method is provided. The receiving module 33 in the base station is further configured to receive the second information sent by the UE in the first cell, where the second information includes information about a source cell in which the UE is located before the UE hands over to or reselects the first cell. That is, the base station acquires information about a source cell in which the UE in the first cell is located before the UE hands over to or reselects the first cell. Then, the sending module 32 sends third information to the source cell of the UE that sends the second information, where the third information includes the information about the UE that sends the second information. After receiving the third information, the source cell may determine that the UE that sends the second information and that is included in the third information has moved to or reselected the first cell, and then, when counting a quantity of group service information expected to be received or counting a quantity of UEs in the cell, the source base station excludes the UE that sends the second information.

Further, in the embodiment shown in FIG. 3 or FIG. 4, the configuration information of the scheduling PTM transmission includes: a radio network temporary identity (Radio Network Temporary Identity, RNTI) of the scheduling PTM transmission, a temporary multicast group identity (Temporary Multicast Group Identity, TMGI) corresponding to the scheduling PTM transmission, and/or resource configuration information used in the scheduling PTM transmission, where the RNTI of the scheduling PTM transmission is used to indicate, to the UE, the RNTI used in the scheduling PTM transmission, the TMGI corresponding to the scheduling PTM transmission is used to indicate an MBMS service identifier of RNTI scheduling of the scheduling PTM transmission, and the resource configuration information used in the scheduling PTM transmission includes subframe and/or frequency resource configuration information used in the scheduling PTM transmission. After receiving the foregoing information sent by the base station, the UE in the first cell may determine that the base station needs to perform scheduling PTM transmission, and use a corresponding identifier or resource to receive data sent by the base station.

Further, in the embodiment shown in FIG. 3 or FIG. 4, the processing module 31 is further configured to: before the sending module 32 sends the configuration information of the scheduling PTM transmission to the UE in the first cell, determine a service list of scheduling PTM transmission of a neighboring cell of the first cell; and the sending module 32 is specifically configured to send the configuration information of the scheduling PTM transmission and the service list of the scheduling PTM transmission of the neighboring cell of the first cell to the UE in the first cell.

Specifically, the UE may be in the mobile state. Therefore, the UE in the first cell may move to a neighboring cell of the first cell. When the UE in the first cell is receiving scheduling PTM transmission data sent by the base station, if the UE moves to the neighboring cell of the first cell, the UE may fail to continue to receive the scheduling PTM transmission data. To resolve this problem, the processing module 31 is further configured to: before the sending module 32 sends the configuration information of the scheduling PTM transmission to the UE in the first cell, determine a service list of scheduling PTM transmission of a neighboring cell of the first cell. The service list of the scheduling PTM transmission of the neighboring cell of the first cell includes PTM transmission service data that is being sent by the neighboring cell of the first cell. After the UE in first cell receives the service list of the scheduling PTM transmission of the neighboring cell of the first cell, when the UE moves to the neighboring cell of the first cell, if the neighboring cell is also performing the scheduling PTM transmission and a scheduling PTM transmission service is the same as a scheduling PTM transmission service in the first cell, the UE may directly continue to receive, in the neighboring cell, scheduling PTM data.

Further, in the embodiment shown in FIG. 3 or FIG. 4, the sending module 32 is specifically configured to broadcast the configuration information of the scheduling PTM transmission to the UE in the first cell by using system information; or send the configuration information of the scheduling PTM transmission to the UE in the first cell by using a dedicated message.

Further, in the embodiment shown in FIG. 3 or FIG. 4, the sending module 32 is further configured to: before broadcasting the configuration information of the scheduling PTM transmission to the UE in the first cell by using the system information, instruct, by using a paging message, the UE in the first cell to read the configuration information of the scheduling PTM transmission from the system information, where the paging message uses the RNTI of the scheduling PTM transmission or the paging message includes an indication for reading the configuration information of the scheduling PTM transmission.

Specifically, if the sending module 32 needs to broadcast the configuration information of the scheduling PTM transmission to the UE in the first cell by using the system information, before the broadcasting, the sending module 32 further needs to instruct, by using a paging (paging) message, the UE in the first cell to read the configuration information of the scheduling PTM transmission from the system information. The system information broadcast by the base station includes relatively much content, and is broadcast and sent to all UEs served by the base station. Therefore, after the processing module 31 determines to start the scheduling PTM transmission in the first cell, the sending module 32 needs to send the paging message to the UE in the first cell, to instruct the UE to read the configuration information of the scheduling PTM transmission from the system information. Then, after the base station broadcasts the configuration information of the scheduling PTM transmission to the UE in the first cell by using the system information, the UE in the first cell can acquire the configuration information of the scheduling PTM transmission from the system information.

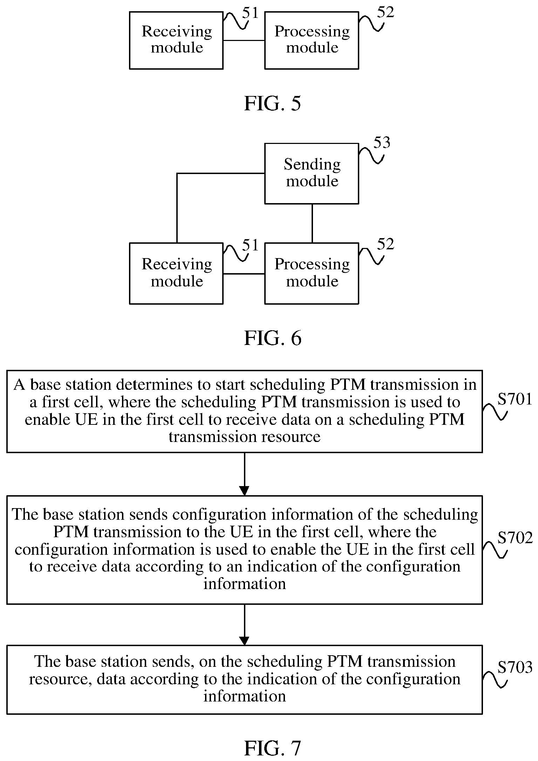

FIG. 5 is a schematic structural diagram of Embodiment 1 of UE according to an embodiment of the present invention. As shown in FIG. 5, the UE in this embodiment includes:
a receiving module 51, configured to receive configuration information of scheduling PTM transmission sent by a base station; and
a processing module 52, configured to determine, according to an indication of the configuration information, to receive data that is sent on a scheduling PTM transmission resource by the base station, where
the receiving module 51 is further configured to receive, according to the indication of the configuration information, the data that is sent on the scheduling PTM transmission resource by the base station.

Specifically, the UE provided in this embodiment is applied to an MBMS system architecture shown in FIG. 2. The UE includes the receiving module 51 and the processing module 52.

In a current MBMS technology, when a base station determines that PTM transmission needs to be performed, all base stations receive broadcast multicast data from a BMSC, each base station sends, in all provided cells, the broadcast multicast data, and all UEs served by the base stations receive the broadcast multicast data. Therefore, the resource utilization is low. However, in the UE provided in this embodiment, first of all, the processing module 31 receives the configuration information of the scheduling PTM transmission sent by the base station, and after the processing module 52 determines, according to the indication of the configuration information, to receive the data that is sent on the scheduling PTM transmission resource by the base station, the receiving module 51 receives, according to the indication of the configuration information, the data that is sent on the scheduling PTM transmission resource by the base station. In other words, when a base station performs PTM transmission, not all UEs served by the base station receive PTM transmission data; instead, the UE first receives configuration information of scheduling PTM transmission sent by the base station, where the configuration information of the scheduling PTM transmission is sent by the base station to UE in a first cell after the base station determines to start the scheduling PTM transmission in the first cell. The base station performs the PTM transmission at the granularity of per cell, and does not need to perform the PTC transmission on the entire network. The scheduling PTM transmission is used to enable the UE in the first cell to receive data on the scheduling PTM transmission resource. In other words, a purpose of the scheduling PTM transmission is to perform the PTM transmission at the granularity of per cell.

The base station provided in this embodiment performs PTM transmission at the granularity of per cell. Therefore, when the base station determines that the PTM transmission does not need to be performed in a cell, the base station does not start the scheduling PTM transmission in the cell, and the UE in the cell does not receive the configuration information of the scheduling PTM transmission sent by the base station, so that the cell does not need to allocate a transmission resource for the PTM transmission, thereby saving the transmission resource, and increasing the resource utilization.

The UE provided in this embodiment receives configuration information of scheduling PTM transmission sent by a base station, then determines, according to an indication of the configuration information, to receive data sent on a scheduling PTM transmission resource by the base station, and finally receives, according to the indication of the configuration information, the data sent on the scheduling PTM transmission resource by the base station. Therefore, PTM transmission can be flexibly performed, saving transmission resources, and increasing resource utilization.

FIG. 6 is a schematic structural diagram of Embodiment 2 of UE according to an embodiment of the present invention. As shown in FIG. 6, on the basis of FIG. 5, the UE in this embodiment further includes:
a sending module 53, configured to: before the receiving module 51 receives the configuration information of the scheduling PTM transmission sent by the base station, send first information to the base station, where the first information includes group service information that the UE expects to receive, and the first information is used to enable the base station to determine, according to first information sent by each UE in a cell in which the UE is located, whether to start the scheduling PTM transmission in the cell in which the UE is located.

Specifically, the sending module 53 in the UE may send the group service information that the UE is interested in to the base station, for example, voice-type information, text-type information, and video-type information, or group service information categorized in another categorization manner, where the information is referred to as the first information. Before the receiving module 51 receives the configuration information of the scheduling PTM transmission sent by the base station, and after the sending module 53 sends the first information to the base station, the base station collects first information sent by all UEs located in the cell in which the UE is located, then the base station determines whether a quantity of same group service information expected to be received in the first information sent by the UEs in the first cell exceeds a preset threshold. If the quantity exceeds the preset threshold, the base station may determine that, among the UEs in the first cell, many users expect to receive a particular piece of group service information, and therefore may determine to start the scheduling PTM transmission in the first cell. In addition, the scheduling PTM transmission is used to transmit the group service information that is expected to be received and whose quantity exceeds the preset threshold. The base station determines, according to group service information that the UE in the first cell expects to receive, whether to start the scheduling PTM transmission in the first cell, and determines, only when a quantity of same group service information that the UE in the first cell expects to receive exceeds the preset threshold, to start the scheduling PTM transmission in the first cell. Therefore, in a cell, when a quantity of same group service information that UE expects to receive is excessively small or there is no same group service information that UE expects to receive, the base station does not determine to start the PTM transmission in the cell, avoiding a problem of the excessively low resource efficiency caused by starting the PTM transmission in a cell that has no UE or an excessively small quantity of UEs.

Further, in the embodiment shown in FIG. 6, the sending module 53 is further configured to send second information to the base station, where the second information includes information about a source cell in which the UE is located before the UE hands over to or reselects the cell in which the UE is located, and the second information is used to enable the base station to send third information to a source base station to which the source cell of the UE belongs, where the third information includes information about the UE, and the third information is used to enable the source base station to exclude the UE when counting a quantity of the group service information expected to be received.

Specifically, in mobile communication, UE may be in a mobile state, and therefore the UE may be handed over between cells. With reference to the cases in this embodiment of the present invention, when the base station provides a group communication service to UE in a cell, if the UE in the cell moves out of the cell, the base station cannot provide the group communication service to the UE. Therefore, the sending module 53 in the UE is further configured to send second information to the base station, where the second information includes information about a source cell in which the UE is located before the UE hands over to or reselects the first cell. After receiving the second information, the base station sends third information to the source cell of the UE that sends the second information, where the third information includes information about the UE that sends the second information. After receiving the third information, the source cell may determine that the UE that sends the second information and that is included in the third information has moved to or reselected the first cell, and then, when counting a quantity of group service information expected to be received or counting a quantity of UEs in the cell, the source base station excludes the UE that sends the second information.

Further, in the embodiment shown in FIG. 5 or FIG. 6, the configuration information of the scheduling PTM transmission includes: an RNTI of the scheduling PTM transmission, a TMGI corresponding to the scheduling PTM transmission, and/or resource configuration information used in the scheduling PTM transmission, where the RNTI of the scheduling PTM transmission is used to indicate, to the UE, the RNTI used in the scheduling PTM transmission, the TMGI corresponding to the scheduling PTM transmission is used to indicate an MBMS service identifier of RNTI scheduling of the scheduling PTM transmission, and the resource configuration information used in the scheduling PTM transmission includes subframe and/or frequency resource configuration information used in the scheduling PTM transmission.

Further, in the embodiment shown in FIG. 5 or FIG. 6, the processing module 52 is specifically configured to: determine, according to the TMGI corresponding to the scheduling PTM transmission, to receive the data that is sent on the scheduling PTM transmission resource by the base station; and determine, according to the RNTI of the scheduling PTM transmission, to receive an RNTI used by the data that is sent on the scheduling PTM transmission resource by the base station; and the receiving module 51 is specifically configured to receive, according to the RNTI, on a transmission resource indicated by the resource configuration information used in the scheduling PTM transmission, the data that is sent on the scheduling PTM transmission resource by the base station.

Further, in the embodiment shown in FIG. 5 or FIG. 6, the receiving module 51 is specifically configured to receive the configuration information of the scheduling PTM transmission sent by the base station, and a service list of scheduling PTM transmission of a neighboring cell of the cell in which the UE is located; and the processing module 52 is further configured to: determine whether the neighboring cell of the cell in which the UE is located is sending scheduling PTM transmission data; and when the UE moves from the cell in which the UE is located to the neighboring cell of the cell in which the UE is located, determine, according to whether the neighboring cell of the cell in which the UE is located is sending the scheduling PTM transmission data, to continue to receive data by means of the scheduling PTM transmission or trigger establishment of a unicast bearer.

Specifically, the UE may be in the mobile state. Therefore, the UE may move to the neighboring cell of the cell in which the UE is located. When the UE is receiving scheduling PTM transmission data sent by the base station, if the UE moves to the neighboring cell of the cell, the UE may fail to continue to receive the scheduling PTM transmission data. To resolve this problem, when receiving the configuration information of the scheduling PTM transmission sent by the base station, the receiving module 51 in the UE is further configured to receive the service list, which is sent by the base station, of the scheduling PTM transmission of the neighboring cell of the cell in which the UE is located. The service list of the scheduling PTM transmission of the neighboring cell of the cell in which the UE is located includes PTM transmission service data that is being sent by the neighboring cell of the cell in which the UE is located. After the receiving module 51 receives the service list of the scheduling PTM transmission of the neighboring cell of the cell in which the UE is located, the processing module 52 may determine whether the neighboring cell of the cell in which the UE is located is sending scheduling PTM transmission data. When the UE moves to the neighboring cell of the cell in which the UE is located, if the neighboring cell is also performing the scheduling PTM transmission and a scheduling PTM transmission service is the same as a scheduling PTM transmission service in the cell in which the UE is located, the UE may directly continue to receive, in the neighboring cell, scheduling PTM data.

Further, in the embodiment shown in FIG. 5 or FIG. 6, the receiving module 51 is specifically configured to receive the configuration information of the scheduling PTM transmission that is broadcast, in the cell in which the UE is located, by the base station by using system information; or receive the configuration information of the scheduling PTM transmission that is sent by the base station by using a dedicated message.

Further, in the embodiment shown in FIG. 5 or FIG. 6, the receiving module 51 is further configured to: before receiving the configuration information of the scheduling PTM transmission that is broadcast, in the cell in which the UE is located, by the base station by using the system information, receive a paging message sent by the base station, where the paging message is used to instruct the UE to read the configuration information of the scheduling PTM transmission from the system information, and the paging message uses the RNTI of the scheduling PTM transmission or the paging message includes an indication for reading the configuration information of the scheduling PTM transmission.

Specifically, if the receiving module 51 needs to receive the configuration information of the scheduling PTM transmission broadcast by the base station by using the system information, before the receiving, the receiving module 51 further needs to learn, by using a paging (paging) message, that the base station sends the configuration information of the scheduling PTM transmission in the system information, thereby reading the configuration information of the scheduling PTM transmission from the system information. The system information broadcast by the base station includes relatively much content, and is broadcast and sent to all UEs served by the base station. Therefore, before receiving the configuration information of the scheduling PTM transmission that is broadcast, in the cell in which the UE is located, by the base station by using the system information, the receiving module 51 further needs to receive a paging message sent by the base station, where the paging message is used to instruct the UE to read the configuration information of the scheduling PTM transmission from the system information, and the paging message uses the RNTI of the scheduling PTM transmission or the paging message includes an indication for reading the configuration information of the scheduling PTM transmission.

FIG. 7 is a flowchart of Embodiment 1 of a group communication method according to an embodiment of the present invention. As shown in FIG. 7, the method in this embodiment includes:
Step S701: A base station determines to start scheduling PTM transmission in a first cell, where the scheduling PTM transmission is used to enable UE in the first cell to receive data on a scheduling PTM transmission resource.
Step S702: The base station sends configuration information of the scheduling PTM transmission to the UE in the first cell, where the configuration information is used to enable the UE in the first cell to receive data according to an indication of the configuration information.
Step S703: The base station sends, on the scheduling PTM transmission resource, data according to the indication of the configuration information.

The group communication method provided in this embodiment is used to complete processing of the base station shown in FIG. 3, and has a similar implementation principle and technical effect; details are not described herein again.

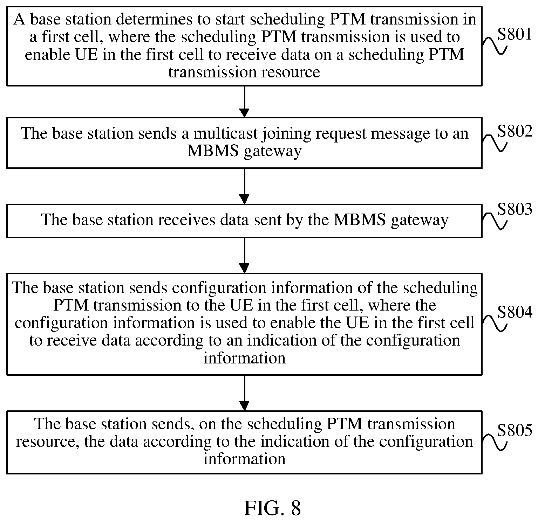

FIG. 8 is a flowchart of Embodiment 2 of a group communication method according to an embodiment of the present invention. As shown in FIG. 8, the method in this embodiment includes:
Step S801: A base station determines to start scheduling PTM transmission in a first cell, where the scheduling PTM transmission is used to enable user equipment UE in the first cell to receive data on a scheduling PTM transmission resource.
Step S802: The base station sends a multicast joining request message to an MBMS gateway.
Step S803: The base station receives data sent by the MBMS gateway.
Step S804: The base station sends configuration information of the scheduling PTM transmission to the UE in the first cell, where the configuration information is used to enable the UE in the first cell to receive data according to an indication of the configuration information.
Step S805: The base station sends, on the scheduling PTM transmission resource according to the indication of the configuration information, the data received from the MBMS gateway.

The group communication method provided in this embodiment is used to complete processing of the base station shown in FIG. 4, and has a similar implementation principle and technical effect; details are not described herein again.

Further, in the embodiment shown in FIG. 7 or FIG. 8, before the determining, by a base station, to start scheduling PTM transmission in a first cell, the method further includes: receiving, by the base station, a first cell scheduling PTM transmission start notification message sent by an upper-level network device, where the upper-level network device includes an MCE, an MME, or an application server; and the determining, by a base station, to start scheduling PTM transmission in a first cell includes: when the base station receives the first cell scheduling PTM transmission start notification message, determining, by the base station, to start the scheduling PTM transmission in the first cell.

Further, in the embodiment shown in FIG. 7 or FIG. 8, the receiving, by the base station, a first cell scheduling PTM transmission start notification message sent by an upper-level network device includes: receiving, by the base station, an MBMS task start message sent by the upper-level network device, where the MBMS task start message includes the first cell scheduling PTM transmission start notification message, and the first cell scheduling PTM transmission start notification message carries identification information or scheduling PTM transmission indication information of the first cell.

Further, in the embodiment shown in FIG. 7 or FIG. 8, before the determining, by a base station, to start scheduling PTM transmission in a first cell, the method further includes: receiving, by the base station, information about the UE in the first cell sent by an upper-level network device, where the upper-level network device includes an MCE, an MME, or an application server; and the determining, by a base station, to start scheduling PTM transmission in a first cell includes: if a quantity of UEs in the first cell exceeds a preset threshold, determining, by the base station, to start the scheduling PTM transmission in the first cell.

Further, in the embodiment shown in FIG. 7 or FIG. 8, before the determining, by a base station, to start scheduling PTM transmission in a first cell, the method further includes: receiving, by the base station, first information sent by the UE in the first cell, where the first information includes group service information that the UE expects to receive; and the determining, by a base station, to start scheduling PTM transmission in a first cell includes: in the first information sent by the UE in the first cell, if a quantity of same group service information expected to be received exceeds a preset threshold, determining, by the base station, to start the scheduling PTM transmission in the first cell, where the scheduling PTM transmission is used to transmit the group service information that is expected to be received and whose quantity exceeds the preset threshold.

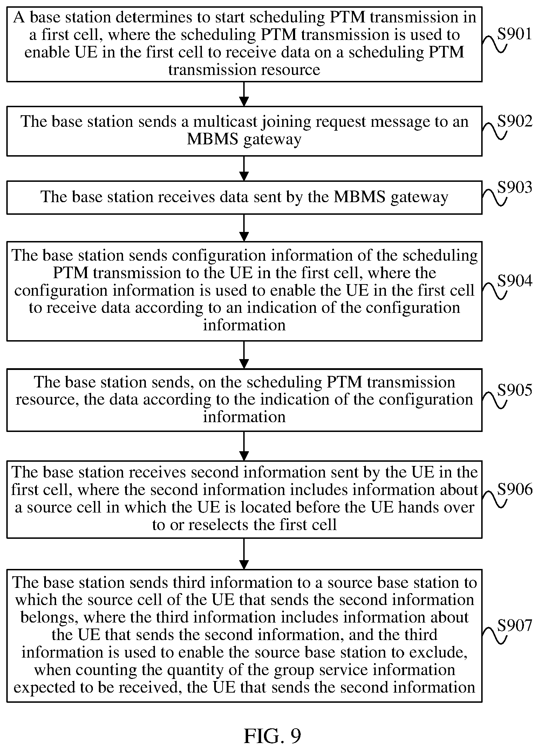

FIG. 9 is a flowchart of Embodiment 3 of a group communication method according to an embodiment of the present invention. As shown in FIG. 9, the method in this embodiment includes:
Step S901: A base station determines to start scheduling PTM transmission in a first cell, where the scheduling PTM transmission is used to enable user equipment UE in the first cell to receive data on a scheduling PTM transmission resource.
Step S902: The base station sends a multicast joining request message to an MBMS gateway.
Step S903: The base station receives data sent by the MBMS gateway.
Step S904: The base station sends configuration information of the scheduling PTM transmission to the UE in the first cell, where the configuration information is used to enable the UE in the first cell to receive data according to an indication of the configuration information.
Step S905: The base station sends, on the scheduling PTM transmission resource according to the indication of the configuration information, the data received from the MBMS gateway.
Step S906: The base station receives second information sent by the UE in the first cell, where the second information includes information about a source cell in which the UE is located before the UE hands over to or reselects the first cell.
Step S907: The base station sends third information to a source base station to which the source cell of the UE that sends the second information belongs, where the third information includes information about the UE that sends the second information, and the third information is used to enable the source base station to exclude, when counting the quantity of the group service information expected to be received, the UE that sends the second information.

Further, in the embodiments shown in FIG. 7 to FIG. 9, the configuration information of the scheduling PTM transmission includes: an RNTI of the scheduling PTM transmission, a TMGI corresponding to the scheduling PTM transmission, and/or resource configuration information used in the scheduling PTM transmission, where the RNTI of the scheduling PTM transmission is used to indicate, to the UE, the RNTI used in the scheduling PTM transmission, the TMGI corresponding to the scheduling PTM transmission is used to indicate an MBMS service identifier of RNTI scheduling of the scheduling PTM transmission, and the resource configuration information used in the scheduling PTM transmission includes subframe and/or frequency resource configuration information used in the scheduling PTM transmission.

Further, in the embodiments shown in FIG. 7 to FIG. 9, before the sending, by the base station, configuration information of the scheduling PTM transmission to the UE in the first cell, the method further includes: determining, by the base station, a service list of scheduling PTM transmission of a neighboring cell of the first cell; and the sending, by the base station, configuration information of the scheduling PTM transmission to the UE in the first cell includes: sending, by the base station, the configuration information of the scheduling PTM transmission and the service list of the scheduling PTM transmission of the neighboring cell of the first cell to the UE in the first cell.

Further, in the embodiments shown in FIG. 7 to FIG. 9, the sending, by the base station, configuration information of the scheduling PTM transmission to the UE in the first cell includes: broadcasting, by the base station, the configuration information of the scheduling PTM transmission to the UE in the first cell by using system information; or sending, by the base station, the configuration information of the scheduling PTM transmission to the UE in the first cell by using a dedicated message.

Further, in the embodiments shown in FIG. 7 to FIG. 9, before the broadcasting, by the base station, the configuration information of the scheduling PTM transmission to the UE in the first cell by using system information, the method further includes: instructing, by the base station, by using a paging message, the UE in the first cell to read the configuration information of the scheduling PTM transmission from the system information, where the paging message uses the RNTI of the scheduling PTM transmission or the paging message includes an indication for reading the configuration information of the scheduling PTM transmission.

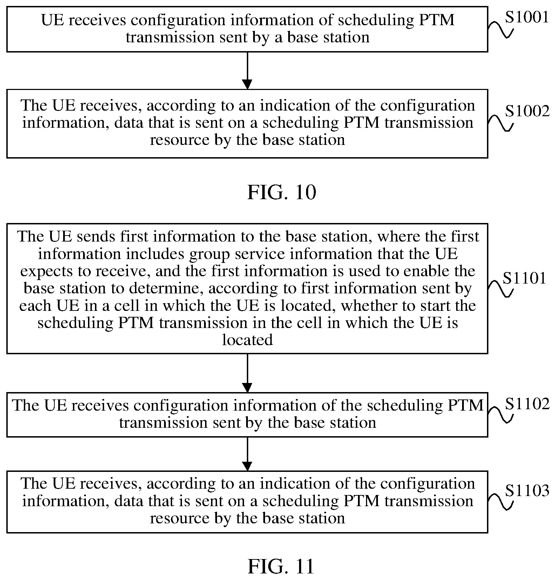

FIG. 10 is a flowchart of Embodiment 4 of a group communication method according to an embodiment of the present invention. As shown in FIG. 10, the method in this embodiment includes:
Step S1001: UE receives configuration information of scheduling PTM transmission sent by a base station.
Step S1002: The UE receives, according to an indication of the configuration information, data that is sent on a scheduling PTM transmission resource by the base station.

The group communication method provided in this embodiment is used to complete processing of the UE shown in FIG. 5, and has a similar implementation principle and technical effect; details are not described herein again.

FIG. 11 is a flowchart of Embodiment 5 of a group communication method according to an embodiment of the present invention. As shown in FIG. 11, the method in this embodiment includes:
Step S1101: The UE sends first information to the base station, where the first information includes group service information that the UE expects to receive, and the first information is used to enable the base station to determine, according to first information sent by each UE in a cell in which the UE is located, whether to start the scheduling PTM transmission in the cell in which the UE is located.
Step S1102: The UE receives configuration information of the scheduling PTM transmission sent by the base station.
Step S1103: The UE receives, according to an indication of the configuration information, data that is sent on a scheduling PTM transmission resource by the base station.

The group communication method provided in this embodiment is used to complete processing of the UE shown in FIG. 6, and has a similar implementation principle and technical effect; details are not described herein again.

Further, in the embodiment shown in FIG. 10 or FIG. 11, before the receiving, by UE, configuration information of scheduling PTM transmission sent by a base station, the method further includes: sending, by the UE, first information to the base station, where the first information includes group service information that the UE expects to receive, and the first information is used to enable the base station to determine, according to first information sent by each UE in a cell in which the UE is located, whether to start the scheduling PTM transmission in the cell in which the UE is located.

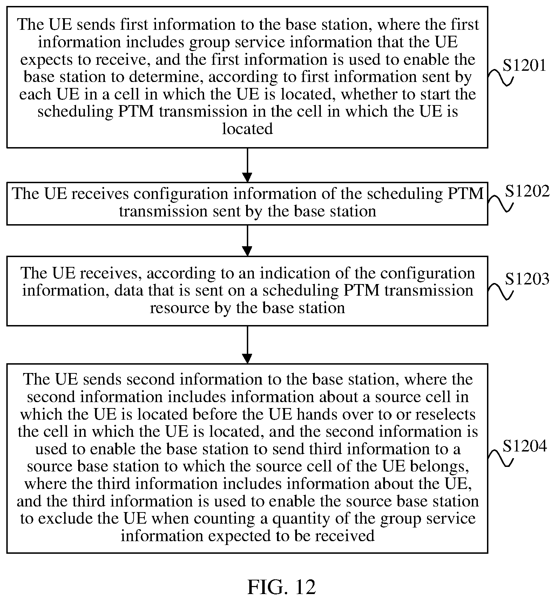

FIG. 12 is a flowchart of Embodiment 6 of a group communication method according to an embodiment of the present invention. As shown in FIG. 12, the method in this embodiment includes:
Step S1201: The UE sends first information to the base station, where the first information includes group service information that the UE expects to receive, and the first information is used to enable the base station to determine, according to first information sent by each UE in a cell in which the UE is located, whether to start the scheduling PTM transmission in the cell in which the UE is located.
Step S1202: The UE receives configuration information of the scheduling PTM transmission sent by the base station.
Step S1203: The UE receives, according to an indication of the configuration information, data that is sent on a scheduling PTM transmission resource by the base station.
Step S1204: The UE sends second information to the base station, where the second information includes information about a source cell in which the UE is located before the UE hands over to or reselects the cell in which the UE is located, and the second information is used to enable the base station to send third information to a source base station to which the source cell of the UE belongs, where the third information includes information about the UE, and the third information is used to enable the source base station to exclude the UE when counting a quantity of the group service information expected to be received.

Further, in the embodiments shown in FIG. 10 to FIG. 12, the configuration information of the scheduling PTM transmission includes: an RNTI of the scheduling PTM transmission, a TMGI corresponding to the scheduling PTM transmission, and/or resource configuration information used in the scheduling PTM transmission, where the RNTI of the scheduling PTM transmission is used to indicate, to the UE, the RNTI used in the scheduling PTM transmission, the TMGI corresponding to the scheduling PTM transmission is used to indicate an MBMS service identifier of RNTI scheduling of the scheduling PTM transmission, and the resource configuration information used in the scheduling PTM transmission includes subframe and/or frequency resource configuration information used in the scheduling PTM transmission.

Further, in the embodiments shown in FIG. 10 to FIG. 12, the receiving, by the UE according to an indication of the configuration information, data that is sent on a scheduling PTM transmission resource by the base station includes: determining, by the UE according to the TMGI corresponding to the scheduling PTM transmission, to receive the data that is sent on the scheduling PTM transmission resource by the base station; determining, by the UE according to the RNTI of the scheduling PTM transmission, to receive an RNTI used by the data that is sent on the scheduling PTM transmission resource by the base station; and receiving, by the UE according to the RNTI, on a transmission resource indicated by the resource configuration information used in the scheduling PTM transmission, the data that is sent on the scheduling PTM transmission resource by the base station.

Further, in the embodiments shown in FIG. 10 to FIG. 12, the receiving, by UE, configuration information of scheduling PTM transmission sent by a base station includes: receiving, by the UE, the configuration information of the scheduling PTM transmission sent by the base station, and a service list of scheduling PTM transmission of a neighboring cell of the cell in which the UE is located; and determining, by the UE, whether the neighboring cell of the cell in which the UE is located is sending scheduling PTM transmission data; and the method further includes: when the UE moves from the cell in which the UE is located to the neighboring cell of the cell in which the UE is located, determining, by the UE according to whether the neighboring cell of the cell in which the UE is located is sending the scheduling PTM transmission data, to continue to receive data by means of the scheduling PTM transmission or trigger establishment of a unicast bearer.

Further, in the embodiments shown in FIG. 10 to FIG. 12, the receiving, by UE, configuration information of scheduling PTM transmission sent by a base station includes: receiving, by the UE, the configuration information of the scheduling PTM transmission that is broadcast, in the cell in which the UE is located, by the base station by using system information; or receiving, by the UE, the configuration information of the scheduling PTM transmission that is sent by the base station by using a dedicated message.

Further, in the embodiments shown in FIG. 10 to FIG. 12, before the receiving, by the UE, the configuration information of the scheduling PTM transmission that is broadcast, in the cell in which the UE is located, by the base station by using system information, the method further includes: receiving, by the UE, a paging message sent by the base station, where the paging message is used to instruct the UE to read the configuration information of the scheduling PTM transmission from the system information, and the paging message uses the RNTI of the scheduling PTM transmission or the paging message includes an indication for reading the configuration information of the scheduling PTM transmission.

It should be noted that, the receiving module 33 in this embodiment of the present invention may correspond to a receiver of a base station, or may correspond to a transceiver of a base station. The sending module 32 may correspond to a transmitter of the base station, or may correspond to the transceiver of the base station. The processing module 31 may correspond to a processor of the base station. Herein, the processor may be a central processing unit (Central Processing Unit, CPU), or an application specific integrated circuit (Application Specific Integrated Circuit, ASIC), or one or more integrated circuits that implement this embodiment of the present invention. The base station may further include a memory, where the memory is configured to store instruction code, and the processor invokes the instruction code in the memory, to control the receiving module 33 and the sending module 32 in this embodiment of the present invention to perform the foregoing operations.

The sending module 53 in this embodiment of the present invention may correspond to a transmitter of user equipment, or may correspond to a transceiver of user equipment. The receiving module 51 may correspond to a receiver of the user equipment, or may correspond to the transceiver of the user equipment. The processing module 52 may correspond to a processor of the user equipment. Herein, the processor may be a CPU, or an ASIC, or one or more integrated circuits that implement this embodiment of the present invention. The user equipment may further include a memory, where the memory is configured to store instruction code, and the processor invokes the instruction code in the memory, to control the sending module 53 and the receiving module 51 in this embodiment of the present invention to perform the foregoing operations.

Persons of ordinary skill in the art may understand that all or a part of the steps of the method embodiments may be implemented by a program instructing relevant hardware. The program may be stored in a computer readable storage medium. When the program runs, the steps of the method embodiments are performed. The foregoing storage medium includes: any medium that can store program code, such as a ROM, a RAM, a magnetic disk, or an optical disc.

Finally, it should be noted that the foregoing embodiments are merely intended for describing the technical solutions of the present invention other than limiting the present invention. Although the present invention is described in detail with reference to the foregoing embodiments, persons of ordinary skill in the art should understand that they may still make modifications to the technical solutions described in the foregoing embodiments or make equivalent replacements to some or all technical features thereof. Therefore, the protection scope of the present invention shall be subject to the protection scope of the claims.

## Claims

1. A group communication method performed by a base station, comprising:
determining (S701) to start scheduling point to multipoint, PTM, transmission in a first cell;
sending (S702) configuration information of the scheduling PTM transmission to a user equipment, UE, in the first cell by using system information, wherein the configuration information of the scheduling PTM transmission comprises:
a radio network temporary identity, RNTI, of the scheduling PTM transmission, a temporary multicast group identity, TMGI, corresponding to the scheduling PTM transmission, and frequency resource configuration information used in the scheduling PTM transmission, wherein the RNTI of the scheduling PTM transmission is used to indicate, to the UE, the RNTI used in the scheduling PTM transmission, and the TMGI corresponding to the scheduling PTM transmission is used to indicate an Multimedia Broadcast Multicast Service, MBMS, service identifier of RNTI scheduling of the scheduling PTM transmission; and
sending (S703), data according to the configuration information of the scheduling PTM transmission.

2. The method according to claim 1, wherein before the determining (S701), to start scheduling PTM transmission in a first cell, the method further comprises:
receiving a first cell scheduling PTM transmission start notification message from an upper-level network device; and
the determining to start scheduling PTM transmission in a first cell comprises:
when the base station receives the first cell scheduling PTM transmission start notification message, determining to start the scheduling PTM transmission in the first cell.

3. The method according to claim 2, wherein the receiving a first cell scheduling PTM transmission start notification message from an upper-level network device comprises:
receiving an MBMS task start message from the upper-level network device, wherein the MBMS task start message comprises the first cell scheduling PTM transmission start notification message, and the first cell scheduling PTM transmission start notification message carries identification information or scheduling PTM transmission indication information of the first cell.

4. The method according to any one of claims 1 to 3, wherein the configuration information of the scheduling PTM transmission further comprises:
subframe resource configuration information used in the scheduling PTM transmission; and/or
the method further comprises:
determining a service list of the scheduling PTM transmission of a neighboring cell of the first cell; and
sending the service list of the scheduling PTM transmission of the neighboring cell of the first cell to the UE in the first cell.

5. A group communication method performed by a user equipment, UE, comprising:
receiving (S 1001) configuration information of scheduling point to multipoint, PTM, transmission from a base station by using system information;
receiving (S1002), according to the configuration information of scheduling PTM transmission, data that is sent by the base station,
wherein the configuration information of the scheduling PTM transmission comprises:
a radio network temporary identity, RNTI, of the scheduling PTM transmission, a temporary multicast group identity, TMGI, corresponding to the scheduling PTM transmission, and frequency resource configuration information used in the scheduling PTM transmission, wherein the RNTI of the scheduling PTM transmission is used to indicate, to the UE, the RNTI used in the scheduling PTM transmission, and the TMGI corresponding to the scheduling PTM transmission is used to indicate an MBMS service identifier of RNTI scheduling of the scheduling PTM transmission.

6. The method according to claim 5, wherein the configuration information of the scheduling PTM transmission further comprises:
subframe resource configuration information used in the scheduling PTM transmission.

7. The method according to claim 5 or 6, wherein the method further comprises:
receiving a service list of the scheduling PTM transmission of a neighboring cell of the first cell from the base station;
determining whether the neighboring cell of the cell in which the UE is located is sending scheduling PTM transmission data; and
when the UE moves from the cell in which the UE is located to the neighboring cell of the cell in which the UE is located, determining, according to whether the neighboring cell of the cell in which the UE is located is sending the scheduling PTM transmission data, to continue to receive data by means of the scheduling PTM transmission or trigger establishment of a unicast bearer.

8. A base station, comprising:
a processing module, configured to determine to start scheduling point to multipoint, PTM, transmission in a first cell;
a sending module, configured to send configuration information of the scheduling PTM transmission to a UE in the first cell by using system information, wherein the configuration information of the scheduling PTM transmission comprises:
a radio network temporary identity, RNTI, of the scheduling PTM transmission, a temporary multicast group identity, TMGI, corresponding to the scheduling PTM transmission, and frequency resource configuration information used in the scheduling PTM transmission, wherein the RNTI of the scheduling PTM transmission is used to indicate, to the UE, the RNTI used in the scheduling PTM transmission, and the TMGI corresponding to the scheduling PTM transmission is used to indicate an MBMS service identifier of RNTI scheduling of the scheduling PTM transmission;
and the sending module is further configured to send data according to the configuration information of the scheduling PTM transmission.

9. The base station according to claim 8; further comprising:
a receiving module, configured to: before the processing module determine to start scheduling PTM transmission in a first cell, receive a first cell scheduling PTM transmission start notification message from an upper-level network device; and
wherein the processing module is specifically configured to: when the base station receives the first cell scheduling PTM transmission start notification message, determine to start the scheduling PTM transmission in the first cell.

10. The base station according to claim 9, wherein the receiving module is specifically configured to receive an MBMS task start message from the upper-level network device, wherein the MBMS task start message comprises the first cell scheduling PTM transmission start notification message, and the first cell scheduling PTM transmission start notification message carries identification information or scheduling PTM transmission indication information of the first cell.

11. The base station according to any one of claims 8 to 10, wherein the configuration information of the scheduling PTM transmission further comprises: subframe resource configuration information used in the scheduling PTM transmission; and/or
wherein the processing module is further configured to determine a service list of the scheduling PTM transmission of a neighboring cell of the first cell; and
wherein the sending module is further configured to send the service list of the scheduling PTM transmission of the neighboring cell of the first cell to the UE in the first cell.

12. User equipment, comprising:
a receiving module, configured to receive configuration information of scheduling point to multipoint, PTM, transmission from a base station by using system information,
wherein the receiving module is further configured to receive according to the configuration of scheduling PTM transmission, data that is sent by the base station,
wherein the configuration information of the scheduling PTM transmission comprises:
a radio network temporary identity, RNTI, of the scheduling PTM transmission, a temporary multicast group identity, TMGI, corresponding to the scheduling PTM transmission, and frequency resource configuration information used in the scheduling PTM transmission, wherein the RNTI of the scheduling PTM transmission is used to indicate, to the UE, the RNTI used in the scheduling PTM transmission, and the TMGI corresponding to the scheduling PTM transmission is used to indicate an MBMS service identifier of RNTI scheduling of the scheduling PTM transmission.

13. The user equipment according to claim 12, wherein the configuration information of the scheduling PTM transmission further comprises: subframe resource configuration information used in the scheduling PTM transmission.

14. The user equipment according to claim 12 or 13, wherein the receiving module is further configured to receive a service list of the scheduling PTM transmission of a neighboring cell of the first cell to the UE in the first cell, and wherein the UE is configured to determine whether the neighboring cell of the cell in which the UE is located is sending scheduling PTM transmission data;
and wherein the UE is further configured to:
when the UE moves from the cell in which the UE is located to the neighboring cell of the cell in which the UE is located, determine according to whether the neighboring cell of the cell in which the UE is located is sending the scheduling PTM transmission data, to continue to receive data by means of the scheduling PTM transmission or trigger establishment of a unicast bearer.

15. A computer-readable storage medium comprising instructions which, when executed by a computer, cause the computer to carry out the method according to any one of claims 1 to 4 or any one of claims 5 to 7.

## Patentansprüche

1. Gruppenkommunikationsverfahren, das durch eine Basisstation durchgeführt wird, das umfasst:
Bestimmen (S701), eine Ablaufsteuerung-Punkt-zu-Mehrpunkt(PTM)-Übertragung in einer ersten Zelle zu starten;
Senden (S702) von Konfigurationsinformationen der Ablaufsteuerung-PTM-Übertragung an eine Benutzereinrichtung (UE) in der ersten Zelle durch Verwenden von Systeminformationen, wobei die Konfigurationsinformationen der Ablaufsteuerung-PTM-Übertragung umfassen:
eine temporäre Funknetzwerkkennung (RNTI) der Ablaufsteuerung-PTM-Übertragung, eine temporäre Multicast-Gruppenkennung (TMGI), die der Ablaufsteuerung-PTM-Übertragung entspricht, und Frequenzressourcenkonfigurationsinformationen, die in der Ablaufsteuerung-PTM-Übertragung verwendet werden, wobei die RNTI der Ablaufsteuerung-PTM-Übertragung verwendet wird, um der UE die RNTI, die in der Ablaufsteuerung-PTM-Übertragung verwendet wird, anzugeben, und die TMGI, die der Ablaufsteuerung-PTM-Übertragung entspricht, verwendet wird, um eine Multimedia-Broadcast-Multicast-Dienst(MBMS)-Dienstkennung der RNTI-Ablaufsteuerung der Ablaufsteuerung-PTM-Übertragung anzugeben; und
Senden (S703) von Daten gemäß den Konfigurationsinformationen der Ablaufsteuerung-PTM-Übertragung.

2. Verfahren nach Anspruch 1, wobei vor dem Bestimmen (S701), die Ablaufsteuerung-PTM-Übertragung in einer ersten Zelle zu starten, das Verfahren ferner umfasst:
Empfangen einer Ablaufsteuerung-PTM-Übertragungsstartbenachrichtigungsmeldung der ersten Zelle von einer Netzwerkvorrichtung einer oberen Ebene; und
das Bestimmen, die Ablaufsteuerung-PTM-Übertragung in einer ersten Zelle zu starten, umfasst:
wenn die Basisstation die Ablaufsteuerung-PTM-Übertragungsstartbenachrichtigungsmeldung der ersten Zelle empfängt, Bestimmen, die Ablaufsteuerung-PTM-Übertragung in der ersten Zelle zu starten.

3. Verfahren nach Anspruch 2, wobei das Empfangen einer Ablaufsteuerung-PTM-Übertragungsstartbenachrichtigungsmeldung der ersten Zelle von einer Netzwerkvorrichtung der oberen Ebene umfasst:
Empfangen einer MBMS-Aufgabenstartmeldung von der Netzwerkvorrichtung der oberen Ebene, wobei die MBMS-Aufgabenstartmeldung die Ablaufsteuerung-PTM-Übertragungsstartbenachrichtigungsmeldung der ersten Zelle umfasst und die Ablaufsteuerung-PTM-Übertragungsstartbenachrichtigungsmeldung der ersten Zelle Kennungsinformationen oder Ablaufsteuerung-PTM-Übertragungsangabeinformationen der ersten Zelle trägt.

4. Verfahren nach einem der Ansprüche 1 bis 3, wobei die Konfigurationsinformationen der Ablaufsteuerung-PTM-Übertragung ferner umfassen:
Unterrahmenressourcenkonfigurationsinformationen, die bei der Ablaufsteuerung-PTM-Übertragung verwendet werden; und/oder
das Verfahren ferner umfasst:
Bestimmen einer Dienstliste der Ablaufsteuerung-PTM-Übertragung einer benachbarten Zelle der ersten Zelle; und
Senden der Dienstliste der Ablaufsteuerung-PTM-Übertragung der benachbarten Zelle der ersten Zelle an die UE in der ersten Zelle.

5. Gruppenkommunikationsverfahren, das durch eine Benutzereinrichtung (UE) durchgeführt wird, das umfasst:
Empfangen (S1001) von Konfigurationsinformationen der Ablaufsteuerung-Punkt-zu-Mehrpunkt(PTM)-Übertragung von einer Basisstation durch Verwenden von Systeminformationen;
Empfangen (S1002), gemäß den Konfigurationsinformationen der Ablaufsteuerung-PTM-Übertragung, von Daten, die durch die Basisstation gesendet werden,
wobei die Konfigurationsinformationen der Ablaufsteuerung-PTM-Übertragung umfassen:
eine temporäre Funknetzwerkkennung (RNTI) der Ablaufsteuerung-PTM-Übertragung,
eine temporäre Multicast-Gruppenkennung (TMGI), die der Ablaufsteuerung-PTM-Übertragung entspricht, und Frequenzressourcenkonfigurationsinformationen, die in der Ablaufsteuerung-PTM-Übertragung verwendet werden, wobei die RNTI der Ablaufsteuerung-PTM-Übertragung verwendet wird, um der UE die RNTI, die in der Ablaufsteuerung-PTM-Übertragung verwendet wird, anzugeben, und die TMGI, die der Ablaufsteuerung-PTM-Übertragung entspricht, verwendet wird, um eine MBMS-Dienstkennung der RNTI-Ablaufsteuerung der Ablaufsteuerung-PTM-Übertragung anzugeben.

6. Verfahren nach Anspruch 5, wobei die Konfigurationsinformationen der Ablaufsteuerung-PTM-Übertragung ferner umfassen: Unterrahmenressourcenkonfigurationsinformationen, die bei der Ablaufsteuerung-PTM-Übertragung verwendet werden.

7. Verfahren nach Anspruch 5 oder 6, wobei das Verfahren ferner umfasst:
Empfangen einer Dienstliste der Ablaufsteuerung-PTM-Übertragung einer benachbarten Zelle der ersten Zelle von der Basisstation;
Bestimmen, ob die benachbarte Zelle der Zelle, in der sich die UE befindet, Ablaufsteuerung-PTM-Übertragungsdaten sendet; und
wenn sich die UE von der Zelle, in der sich die UE befindet, zu der benachbarten Zelle der Zelle, in der sich die UE befindet, bewegt, Bestimmen, gemäß dem, ob die benachbarte Zelle der Zelle, in der sich die UE befindet, die Ablaufsteuerung-PTM-Übertragungsdaten sendet, um fortzufahren, Daten mittels der Ablaufsteuerung-PTM-Übertragung zu empfangen oder einen Aufbau eines Unicast-Trägers auszulösen.

8. Basisstation, die umfasst:
ein Verarbeitungsmodul, das konfiguriert ist, um zu bestimmen, die Ablaufsteuerung-Punkt-zu-Mehrpunkt(PTM)-Übertragung in einer ersten Zelle zu starten;
ein Sendemodul, das konfiguriert ist, um Konfigurationsinformationen der Ablaufsteuerung-PTM-Übertragung durch Verwenden von Systeminformationen an die UE in der ersten Zelle zu senden, wobei die Konfigurationsinformationen der Ablaufsteuerung-PTM-Übertragung umfassen:
eine temporäre Funknetzwerkkennung (RNTI) der Ablaufsteuerung-PTM-Übertragung, eine temporäre Multicast-Gruppenkennung (TMGI), die der Ablaufsteuerung-PTM-Übertragung entspricht, und Frequenzressourcenkonfigurationsinformationen, die in der Ablaufsteuerung-PTM-Übertragung verwendet werden, wobei die RNTI der Ablaufsteuerung-PTM-Übertragung verwendet wird, um der UE die RNTI, die in der Ablaufsteuerung-PTM-Übertragung verwendet wird, anzugeben, und die TMGI, die der Ablaufsteuerung-PTM-Übertragung entspricht, verwendet wird, um eine MBMS-Dienstkennung der RNTI-Ablaufsteuerung der Ablaufsteuerung-PTM-Übertragung anzugeben;
und das Sendemodul ferner konfiguriert ist, um Daten gemäß den Konfigurationsinformationen der Ablaufsteuerung-PTM-Übertragung zu senden.

9. Basisstation nach Anspruch 8; die ferner umfasst:
ein Empfangsmodul, das konfiguriert ist zum: bevor das Verarbeitungsmodul bestimmt, die Ablaufsteuerung-PTM-Übertragung in einer ersten Zelle zu starten, Empfangen einer Ablaufsteuerung-PTM-Übertragungsstartbenachrichtigungsmeldung der ersten Zelle von einer Netzwerkvorrichtung der oberen Ebene; und
wobei das Verarbeitungsmodul speziell konfiguriert ist zum: wenn die Basisstation die Ablaufsteuerung-PTM-Übertragungsstartbenachrichtigungsmeldung der ersten Zelle empfängt, Bestimmen, die Ablaufsteuerung-PTM-Übertragung in der ersten Zelle zu starten.

10. Basisstation nach Anspruch 9, wobei das Empfangsmodul speziell konfiguriert ist, um eine MBMS-Aufgabenstartmeldung von der Netzwerkvorrichtung der oberen Ebene zu empfangen, wobei die MBMS-Aufgabenstartmeldung die Ablaufsteuerung-PTM-Übertragungsstartbenachrichtigungsmeldung der ersten Zelle umfasst und die Ablaufsteuerung-PTM-Übertragungsstartbenachrichtigungsmeldung der ersten Zelle Kennungsinformationen oder Ablaufsteuerung-PTM-Übertragungsangabeinformationen der ersten Zelle trägt.

11. Basisstation nach einem der Ansprüche 8 bis 10, wobei die Konfigurationsinformationen der Ablaufsteuerung-PTM-Übertragung ferner umfassen:
Unterrahmenressourcenkonfigurationsinformationen, die bei der Ablaufsteuerung-PTM-Übertragung verwendet werden; und/oder
wobei das Verarbeitungsmodul ferner konfiguriert ist, um eine Dienstliste der Ablaufsteuerung-PTM-Übertragung einer benachbarten Zelle der ersten Zelle zu bestimmen; und
wobei das Sendemodul ferner konfiguriert ist, um die Dienstliste der Ablaufsteuerung-PTM-Übertragung der benachbarten Zelle der ersten Zelle an die UE in der ersten Zelle zu senden.

12. Benutzereinrichtung, die umfasst:
ein Empfangsmodul, das konfiguriert ist, um Konfigurationsinformationen der Ablaufsteuerung-Punkt-zu-Mehrpunkt(PTM)-Übertragung von einer Basisstation durch Verwenden von Systeminformationen zu empfangen,
wobei das Empfangsmodul ferner konfiguriert ist, um Daten, die durch die Basisstation gesendet werden, gemäß der Konfiguration der Ablaufsteuerung-PTM-Übertragung zu empfangen,
wobei die Konfigurationsinformationen der Ablaufsteuerung-PTM-Übertragung umfassen:
eine temporäre Funknetzwerkkennung (RNTI) der Ablaufsteuerung-PTM-Übertragung, eine temporäre Multicast-Gruppenkennung (TMGI), die der Ablaufsteuerung-PTM-Übertragung entspricht, und Frequenzressourcenkonfigurationsinformationen, die in der Ablaufsteuerung-PTM-Übertragung verwendet werden, wobei die RNTI der Ablaufsteuerung-PTM-Übertragung verwendet wird, um der UE die RNTI, die in der Ablaufsteuerung-PTM-Übertragung verwendet wird, anzugeben, und die TMGI, die der Ablaufsteuerung-PTM-Übertragung entspricht, verwendet wird, um eine MBMS-Dienstkennung der RNTI-Ablaufsteuerung der Ablaufsteuerung-PTM-Übertragung anzugeben.

13. Benutzereinrichtung nach Anspruch 12, wobei die Konfigurationsinformationen der Ablaufsteuerung-PTM-Übertragung ferner umfassen:
Unterrahmenressourcenkonfigurationsinformationen, die bei der Ablaufsteuerung-PTM-Übertragung verwendet werden.

14. Benutzereinrichtung nach Anspruch 12 oder 13, wobei das Empfangsmodul ferner konfiguriert ist, um eine Dienstliste der Ablaufsteuerung-PTM-Übertragung einer benachbarten Zelle der ersten Zelle an die UE in der ersten Zelle zu empfangen, und wobei die Benutzereinrichtung konfiguriert ist, um zu bestimmen, ob die benachbarte Zelle der Zelle, in der sich die UE befindet, Ablaufsteuerung-PTM-Übertragungsdaten sendet;
und wobei der UE ferner konfiguriert ist zum:
wenn sich die UE von der Zelle, in der sich die UE befindet, zu der benachbarten Zelle der Zelle, in der sich die UE befindet, bewegt, Bestimmen, gemäß dem, ob die benachbarte Zelle der Zelle, in der sich die UE befindet, die Ablaufsteuerung-PTM-Übertragungsdaten sendet, um fortzufahren, Daten mittels der Ablaufsteuerung-PTM-Übertragung zu empfangen oder einen Aufbau eines Unicast-Trägers auszulösen.

15. Computerlesbares Speichermedium, das Anweisungen umfasst, die, wenn sie durch einen Computer ausgeführt werden, den Computer veranlassen, das Verfahren nach einem der Ansprüche 1 bis 4 oder einem der Ansprüche 5 bis 7 vorzunehmen.

## Revendications

1. Procédé de communication de groupe effectué par une station de base, comprenant :
la détermination (S701) du démarrage d'une transmission point-multipoint, PTM, de planification dans une première cellule ;
l'envoi (S702) d'informations de configuration de la transmission PTM de planification à un équipement utilisateur, UE, dans la première cellule en utilisant des informations système, dans lequel les informations de configuration de la transmission PTM de planification comprennent :
une identité temporaire de réseau radio, RNTI, de la transmission PTM de planification, une identité de groupe de multidiffusion temporaire, TMGI, correspondant à la transmission PTM de planification, et des informations de configuration de ressource de fréquence utilisées dans la transmission PTM de planification, dans lequel la RNTI de la transmission PTM de planification est utilisée pour indiquer, à l'UE, la RNTI utilisée dans la transmission PTM de planification, et la TMGI correspondant à la transmission PTM de planification est utilisée pour indiquer un identifiant de service de service de diffusion/multidiffusion multimédia, MBMS, de planification RNTI de la transmission PTM de planification ; et
l'envoi (S703), de données selon les informations de configuration de la transmission PTM de planification.

2. Procédé selon la revendication 1, dans lequel, avant la détermination (S701) du démarrage d'une transmission PTM de planification dans une première cellule, le procédé comprend en outre :
la réception d'un message de notification de démarrage de transmission PTM de planification de première cellule en provenance d'un dispositif de réseau de niveau supérieur ; et
la détermination du démarrage d'une transmission PTM de planification dans une première cellule comprend :
lorsque la station de base reçoit le message de notification de démarrage de planification de transmission PTM de première cellule, la détermination du démarrage de la transmission PTM de planification dans la première cellule.

3. Procédé selon la revendication 2, dans lequel la réception d'un message de notification de démarrage de transmission PTM de planification de première cellule en provenance d'un dispositif de réseau de niveau supérieur comprend :
la réception d'un message de démarrage de tâche MBMS en provenance du dispositif de réseau de niveau supérieur, dans lequel le message de démarrage de tâche MBMS comprend le message de notification de démarrage de transmission PTM de planification de première cellule, et le message de notification de démarrage de transmission PTM de planification de première cellule transporte des informations d'identification ou des informations d'indication de transmission PTM de planification de la première cellule.

4. Procédé selon l'une quelconque des revendications 1 à 3, dans lequel les informations de configuration de la transmission PTM de planification comprennent en outre :
des informations de configuration de ressource de sous-trame utilisées dans la transmission PTM de planification ; et/ou
le procédé comprend en outre :
la détermination d'une liste de services de la transmission PTM de planification d'une cellule voisine de la première cellule ; et
l'envoi de la liste de services de la transmission PTM de planification de la cellule voisine de la première cellule à l'UE dans la première cellule.

5. Procédé de communication de groupe effectué par un équipement utilisateur, UE, comprenant :
la réception (S1001) d'informations de configuration de transmission point-multipoint, PTM, de planification en provenance d'une station de base en utilisant des informations système ;
la réception (S1002), selon les informations de configuration de transmission PTM de planification, de données qui sont envoyées par la station de base,
dans lequel les informations de configuration de la transmission PTM de planification comprennent :
une identité temporaire de réseau radio, RNTI, de la transmission PTM de planification, une identité de groupe de multidiffusion temporaire, TMGI, correspondant à la transmission PTM de planification, et des informations de configuration de ressource de fréquence utilisées dans la transmission PTM de planification, dans
lequel la RNTI de la transmission PTM de planification est utilisée pour indiquer, à l'UE, la RNTI utilisée dans la transmission PTM de planification, et la TMGI correspondant à la transmission PTM de planification est utilisée pour indiquer un identifiant de service MBMS de planification RNTI de la transmission PTM de planification.

6. Procédé selon la revendication 5, dans lequel les informations de configuration de la transmission PTM de planification comprennent en outre :
des informations de configuration de ressource de sous-trame utilisées dans la transmission PTM de planification.

7. Procédé selon la revendication 5 ou 6, dans lequel le procédé comprend en outre : la réception d'une liste de services de la transmission PTM de planification d'une cellule voisine de la première cellule en provenance de la station de base ;
le fait de déterminer si la cellule voisine de la cellule dans laquelle se trouve l'UE envoie des données de transmission PTM de planification ; et
lorsque l'UE se déplace de la cellule dans laquelle se trouve l'UE à la cellule voisine de la cellule dans laquelle se trouve l'UE, le fait de déterminer, selon que la cellule voisine de la cellule dans laquelle se trouve l'UE envoie ou non les données de transmission PTM de planification, de continuer à recevoir des données au moyen de la transmission PTM de planification ou de déclencher l'établissement d'un support monodiffusion.

8. Station de base, comprenant :
un module de traitement, configuré pour déterminer le démarrage d'une transmission point-multipoint, PTM, de planification dans une première cellule ;
un module d'envoi, configuré pour envoyer des informations de configuration de la transmission PTM de planification à une UE dans la première cellule en utilisant des informations système, dans laquelle les informations de configuration de la transmission PTM de planification comprennent :
une identité temporaire de réseau radio, RNTI, de la transmission PTM de planification, une identité de groupe de multidiffusion temporaire, TMGI, correspondant à la transmission PTM de planification, et des informations de configuration de ressources de fréquence utilisées dans la transmission PTM de planification, dans laquelle la RNTI de la transmission PTM de planification est utilisée pour indiquer, à l'UE, la RNTI utilisée dans la transmission PTM de planification, et la TMGI correspondant à la transmission PTM de planification est utilisée pour indiquer un identifiant de service MBMS de planification RNTI de la transmission PTM de planification ;
et le module d'envoi est en outre configuré pour envoyer des données selon les informations de configuration de la transmission PTM de planification.

9. Station de base selon la revendication 8 ; comprenant en outre :
un module de réception, configuré pour : avant que le module de traitement ne détermine le démarrage d'une transmission PTM de planification dans une première cellule, recevoir un message de notification de démarrage de transmission PTM de planification de première cellule en provenance d'un dispositif de réseau de niveau supérieur ; et
dans laquelle le module de traitement est spécifiquement configuré pour : lorsque la station de base reçoit le message de notification de démarrage de transmission PTM de planification de première cellule, déterminer le démarrage de la transmission PTM de planification dans la première cellule.

10. Station de base selon la revendication 9, dans laquelle le module de réception est spécifiquement configuré pour recevoir un message de démarrage de tâche MBMS en provenance du dispositif de réseau de niveau supérieur, dans laquelle le message de démarrage de tâche MBMS comprend le message de notification de démarrage de transmission PTM de planification de première cellule, et le message de notification de démarrage de transmission PTM de planification de première cellule transporte des informations d'identification ou des informations d'indication de transmission PTM de planification de la première cellule.

11. Station de base selon l'une quelconque des revendications 8 à 10, dans laquelle les informations de configuration de la transmission PTM de planification comprennent en outre : des informations de configuration de ressource de sous-trame utilisées dans la transmission PTM de planification ; et/ou
dans laquelle le module de traitement est en outre configuré pour déterminer une liste de services de la transmission PTM de planification d'une cellule voisine de la première cellule ; et
dans laquelle le module d'envoi est en outre configuré pour envoyer la liste de services de la transmission PTM de planification de la cellule voisine de la première cellule à l'UE dans la première cellule.

12. Équipement utilisateur, comprenant :
un module de réception, configuré pour recevoir des informations de configuration d'une transmission point-multipoint, PTM, de planification, en provenance d'une station de base, en utilisant des informations système,
dans lequel le module de réception est en outre configuré pour recevoir, selon la configuration de transmission PTM de planification, des données qui sont envoyées par la station de base,
dans lequel les informations de configuration de la transmission PTM de planification comprennent :
une identité temporaire de réseau radio, RNTI, de la transmission PTM de planification, une identité de groupe de multidiffusion temporaire, TMGI, correspondant à la transmission PTM de planification, et des informations de configuration de ressource de fréquence utilisées dans la transmission PTM de planification, dans lequel la RNTI de la transmission PTM de planification est utilisée pour indiquer, à l'UE, la RNTI utilisée dans la transmission PTM de planification, et la TMGI correspondant à la transmission PTM de planification est utilisée pour indiquer un identifiant de service MBMS de planification RNTI de la transmission PTM de planification.

13. Équipement utilisateur selon la revendication 12, dans lequel les informations de configuration de la transmission PTM de planification comprennent en outre : des informations de configuration de ressources de sous-trame utilisées dans la transmission PTM de planification.

14. Équipement utilisateur selon la revendication 12 ou 13, dans lequel le module de réception est en outre configuré pour recevoir une liste de services de la transmission PTM de planification d'une cellule voisine de la première cellule à l'UE dans la première cellule, et dans lequel l'UE est configuré pour déterminer si la cellule voisine de la cellule dans laquelle se trouve l'UE envoie des données de transmission PTM de planification ;
et dans lequel l'UE est en outre configuré pour :
lorsque l'UE se déplace de la cellule dans laquelle se trouve l'UE à la cellule voisine de la cellule dans laquelle se trouve l'UE, déterminer, selon que la cellule voisine de la cellule dans laquelle se trouve l'UE envoie ou non les données de transmission PTM de planification, de continuer à recevoir des données au moyen de la transmission PTM de planification ou de déclencher l'établissement d'un support monodiffusion.

15. Support de stockage lisible par ordinateur comprenant des instructions qui, lorsqu'elles sont exécutées par un ordinateur, amènent l'ordinateur à mettre en œuvre le procédé selon l'une quelconque des revendications 1 à 4 ou l'une quelconque des revendications 5 à 7.
